# EUROPEAN PATENT APPLICATION

(11) **EP 1 328 073 A2**
(43) Date of publication of application: **16.07.2003**
(21) Application number: 03000432.9
(22) Date of filing: 10.01.2003
(51) Int. Cl.: H04B 7/185

(54) **Intermediate frequency transponder payload implementation**

(30) Priority: 11.01.2002 US 44264
(71) Applicant: TRW INC., Redondo Beach, CA 90278 (US)
(72) Inventor: Lane, Daniel R., Santa Monica, CA 90405 (US); DiCamillo, Nicholas F., Torrance, CA 90503 (US); Franzen, Daniel R., Hermosa Beach, CA 90278 (US)
(74) Representative: Schmidt, Steffen J., Dipl.-Ing.

(57) **Abstract**

A multi-beam satellite has an input section (20,30,40,50,110,120) to receive uplink spot beams in a first range of frequencies and an output section (510,550) to transmit downlink spot beams in a second range of frequencies. An IF section is coupled between the first antenna and second antenna. It down-converts (130) the uplink spot beams in the first range of frequencies to intermediate signals in an intermediate range of frequencies, flexibly and selectively switches (210,310) and filters the intermediate signals in the intermediate range of frequencies, and up-converts (320) the intermediate signals in the intermediate range of frequencies to the downlink spot beams in the second range of frequencies.

## Description

### BACKGROUND OF THE INVENTION

### 1. Field of Invention

This invention relates generally to the field of communication satellites. In particular, the invention relates to the payload circuitry of a broadband communication satellite.

### 2. Discussion of the Related Art

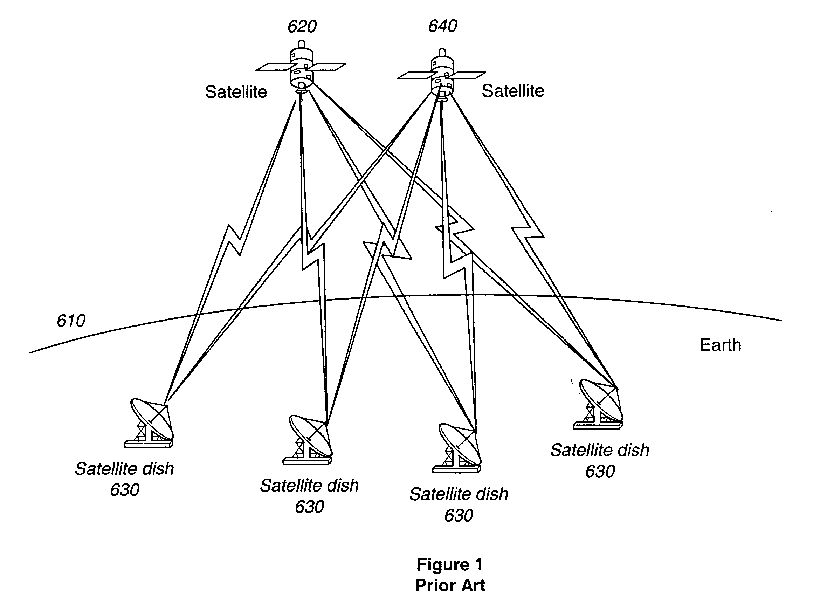

Fig. 1 is an illustration of two satellites in a conventional satellite communications network. Satellites 620 and 640 provide communications to all parts of a large region 610 of Earth, such as North America, including several ground stations 630, using a few large coverage areas in a uniform coverage distribution methodology. With such communications satellites, if traffic demand increases in one location of region 610, the few large coverage areas of satellites 620 and 640 cannot be reconfigured in orbit to handle the additional load from the increased traffic at that location.

It is possible to utilize multiple feeds to form multiple spot beams which each target a specific location of region 610. Conventionally, only a relatively small number of feeds could be placed within a single antenna due to the large feed horn size. However, with the spot beam antenna technology described in U.S. Patent No. 6,211,835, U.S. Patent No. 6,215,452 and U.S. Patent No. 6,236,375, assigned to the assignee of this patent application and hereby incorporated by reference in their entirety, it is possible to have systems with a large number of spot beams, 32 or more for example.

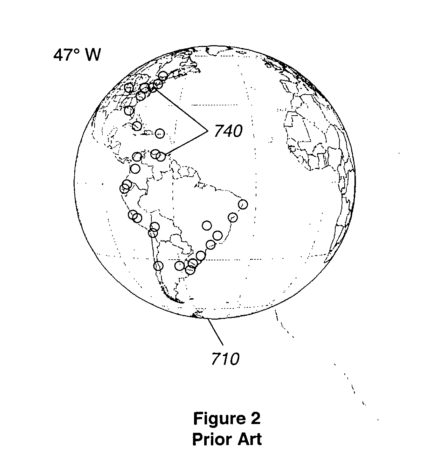

Fig. 2 is an example illustration of spot beams positioned over predefined Earth locations in a non-uniform coverage distribution utilizing the previously mentioned antenna system. Satellite 710 positions its spot beams 740 to cover South America and the east coast of the United States from its position at 47 degrees west longitude.

Once the feeds are set within a satellite, they may not be changed individually to target another geographical location. However, unlike a uniform coverage distribution methodology, the spot beams in a non-uniform technology may be directed towards those areas where demand is highest. The positioning of the spot beams can be determined by the physical alignment of the feeds in the antenna of the satellite and the longitude at which the satellite is positioned in geosynchronous orbit such as detailed in U.S. Patent Nos. 6,211,835; 6,215,452; and 6,236,375.

Spot beam broadband systems frequently divide the system's capacity into beam groups. In a typical system, each beam group consists of a number of coverage regions on the ground and the related satellite resources allocated to serving these regions. The payload can have switches to change the location from which a spot beam is received or transmitted or to switch signals between different paths, and individual examples of switching are common. More than one spot beam may be directed at any given location within the range of the satellites. Systems historically have pre-defined how spectrum was to be allocated among the coverage areas and hard-wired power-dividers, power-divide modules or other modules were used to allocate uplink bandwidth. The problem with this approach is that demand for the system is highly uncertain, and it is likely that some cells will have over-allocated resources while others will have under-allocated resources. There is a need for a more flexible approach to on-orbit, reallocate satellite uplink channel bandwidth among cells in a group.

With a large number of spot beams, the mass and cost of the payload is greatly affected by the efficiency of generating frequency translations. A satellite may have a traditional direct conversion architecture having a low noise amplifier (LNA) at the uplink frequency (e.g., 30 GHz), power division, and then down-conversion. The LNA may be antenna mounted or it may be integrated in a unit with block down-conversion. The down-conversion may be implemented by various frequency shifts to move the input bands into the proper position in the downlink spectrum (e.g., 19.5 GHz or 20.0 GHz). The size of the hardware required for this approach means that the equipment is far from the uplink antenna. The use of an RF frequency results in degraded performance as well as higher mass and cost due to the need for extensive use of waveguides.

There are some alternative architectures, such as Intelsat VII, which employ an intermediate frequency (IF). IF implementations for transponder satellites, such as C-Band IF for a Ku-band system, are known. In a double-conversion architecture, an LNA is followed by a down-conversion. Power division and filtering is performed at the IF, for example at 4-6 GHz. The signal is then up-converted to the proper downlink frequency, possibly with a selectable up-conversion for spectral flexibility. These approaches still have bulky hardware with degraded performance and higher mass and cost.

### BRIEF SUMMARY OF THE INVENTION

The preferred embodiments involve a satellite communications network having the maximum feasible bandwidth and on-orbit capacity reallocation capability while seeking to minimize the cost and mass of the payload architecture. This general object is provided by a practical and simple implementation of the on-orbit flexibility enabled by modern antenna designs which is low cost, low mass and low power.

An object of the preferred embodiments is to provide a broadband communications network based on a multi-beam satellite that can on-orbit, for an uplink beam, pull off signal information, in real-time from each spot beam within a chosen group and input the signal information into a flexible uplink implementation and payload frequency plan. The flexible uplink implementation selects a combination of spot beams and the payload frequency plan provides two conversions, one down from the uplink K-Band to C-band IF and one up from the C-band IF to the K-band downlink frequencies. Such a satellite provides maximum bandwidth and on-orbit reallocation of channel capability between spot beams in any chosen group.

In one aspect of the invention, the flexible uplink implementation allows on-orbit reassignment of uplink bandwidth among a group of user cells. The signal from a given spot beam is power divided and routed to a set of switches and a multiplexer in an IF section. The switches and multiplexer in the IF section may select a signal, filter the signal, and combine it with other signals. The combined signal may then be amplified, and transmitted via a K-band transponder according to a advantageous payload frequency plan.

Other objects, advantages and salient features of the invention will become apparent from the following detailed description taken in conjunction with the annexed drawings, which disclose preferred embodiments of the invention.

### BRIEF DESCRIPTION OF THE DRAWINGS

The invention will be described in detail with reference to the following drawings in which like reference numerals represent like elements and wherein:

Fig. 1 is an illustration of a conventional satellite communication network having two satellites providing total redundancy;

Fig. 2 is an example illustration of spot beams positioned over predefined Earth locations utilizing a multiple spot beam antenna;

Fig. 3 is a block diagram of the payload circuitry, including a C-Band IF section, in the example embodiments of the invention;

Fig. 4 is a diagram illustrating the flexibility of capacity in a satellite in order to re-allocate capacity within a geographical area where demand has unexpectedly changed;

Fig. 5 is an illustration of the payload frequency plan carried out by the C-Band IF section of Fig. 3 in the example embodiments of the present invention; and

Fig. 6 is a diagram of the beam group flexibility in the example embodiments of the invention.

### DETAILED DESCRIPTION OF THE INVENTION

The preferred embodiments of the present invention will now be described with respect to a multi-beam satellite that includes an input section to receive a plurality of beams in a beam group (from Earth) and an output section to transmit a plurality of beams in a beam group (to Earth). An IF section is coupled between the input section and the output section. The IF section includes provides a flexible combination of switching and filtering the first plurality of beams (i.e., uplink beams) received by the input section and routed to the second plurality of beams (i.e., downlink beams) transmitted by the output section according to a payload frequency plan. The preferred embodiments are merely exemplary, and are in no way intended to limit the invention or its applications or uses. The terminologies of signal, signals, beam or beams may be used throughout and are meant to be interchangeable.

Before describing details of the payload frequency plan, a brief overview of an exemplary satellite payload architecture using a C-band IF for a K-band transponded payload is provided. The exemplary satellite payload architecture is capable of receiving higher frequency uplink beams at a plurality of receive antennas, converting the higher frequency to a lower frequency for switching and filtering of channels, converting the lower frequency signals to a higher frequency, and distributing the high power signals to one of the plurality of transmit antennas.

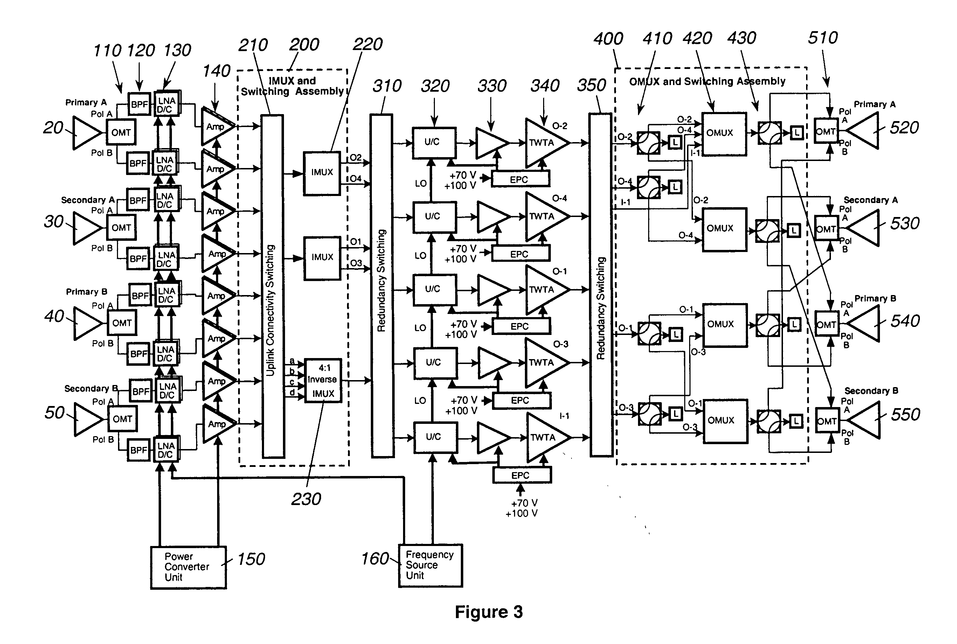

Fig. 3 is a block diagram illustrating electronics in a payload for only one beam group of a multi-beam satellite according to the preferred embodiments of the present invention. The satellite payload architecture may include similar electronics for each of the other beam groups. As one example, the satellite may include antenna structures for receiving and transmitting numerous beam groups, for example eight beam groups.

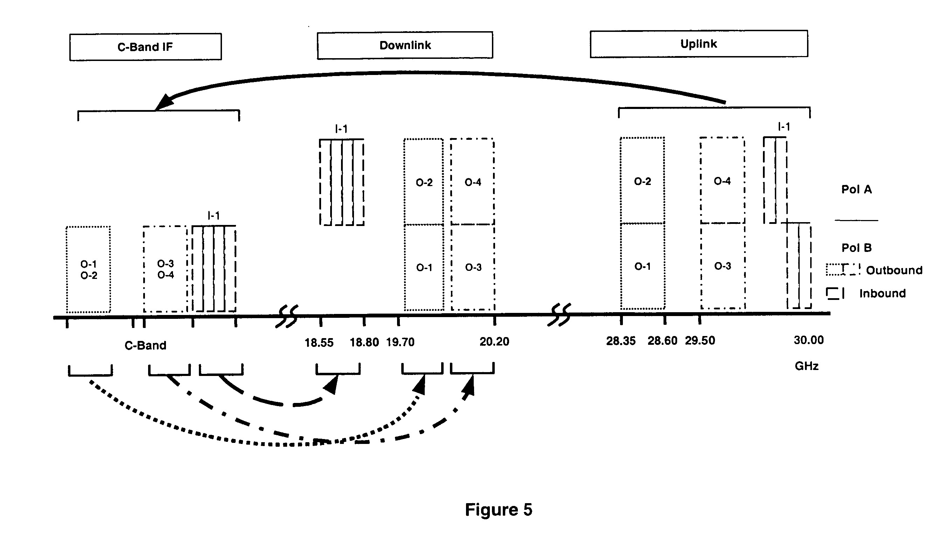

Fig. 3 shows a first dual-polarization antenna 20, a second dual-polarization antenna 30, a third dual-polarization antenna 40 and a fourth dual-polarization antenna 50 each to receive uplink beams from Earth in a well-known manner. As shown in Fig. 5, the uplink beams may be in a first frequency range of between 28.35 GHz and 28.60 GHz and a second frequency range of between 29.50 GHz and 30.00 GHz. Upon receipt of the uplink signals (such as broadband communication signals) at the antennas, the received signals pass through four ortho-mode transducers (OMT) 110 to eight band pass filters (BPF) 120. The filtered signals may pass to eight low noise amplifier down-converters (LNA D/C) 130 that convert the received and filtered signals from the higher frequencies (such as approximately 30 GHz in the K-band) to lower intermediate frequencies (such as approximately 4 or 5 GHz) in the C-Band.

The down-conversion of the uplink beams in the higher frequencies to the lower intermediate frequencies in the C-band preferably occurs on an antenna-mounted miniature RF module. The RF module incorporates the low noise amplifier (LNA) 130 and internal redundancy switching. Instead of only a low noise amplifier, the RF module may include a combination of a low noise amplifier and down-converter (LNA D/C). The antenna mount and the IF interface between the rest of the payload architecture creates several advantages. The shorter lengths between antennas 20, 30, 40 and 50 and LNA 130 allows for lower noise. Together with the multi-beam antenna structure, the lower frequencies allow coaxial cables to be used to carry signals from LNA D/C's 130 to the beam groups rather than waveguides. This is a significant simplification of satellite payload architecture and integration as compared to conventional satellite payload architecture and integration. It is much less expensive to design and allows for a more flexible response to changing requirements. For example, it makes it more affordable to change coverage areas. The low frequency of operation also permits cheaper and higher performance of the flexible connectivity and filtering operations.

The lower frequency C-Band IF signals may then be amplified by eight C-Band utility amplifiers 140 and proceed to an Input Multiplexer (IMUX) and switching assembly 200. The IMUX and switching assembly 200 may include an uplink connectivity switching network 210, which may be a power dividing switching network. Signals output from the uplink connectivity switching network 210 may be input to either one of the two outbound input multiplexers (IMUX) 220 or to the 4:1 inverse IMUX 230. The IMUXes 220 outputs O1, O2, O3 and O4 are connected to a C-Band redundancy switching network 310. The 4:1 inverse IMUX 230 output is connected to the C-Band redundancy switching network 310. The C-Band IF section includes the C-band amplifiers 140, the IMUX and Switching Assembly 200 and Redundancy switching 310.

The C-Band redundancy switching network 310 outputs are connected to five up-converters (U/C) 320. The U/Cs 320 convert the lower frequency signals to higher K-band frequency signals (such as approximately 20 GHz) that will be used for transmission back to the Earth. As shown in Fig. 5, the downlink frequencies may be in a first range of between 18.55 GHz and 18.8 GHz or in a second range of between 19.7 GHz and 20.2 GHz. The higher frequency K-band signals may then pass through five K-band linearized channel amplifiers (LCAMP) 330 and five high power amplifiers, which may consist of Traveling Wave Tube Amplifiers (TWTAs) 340. The five TWTAs 340 are high power amplifiers that supply the transmit RF power to achieve the downlink transmission. The five TWTAs 340 output four high power outbound signals O-1, O-2, O-3, O-4 to the users and one inbound signal I-1 to the gateway (not shown). The K-band redundancy switching network 350 connects the signals I-1, O-1, O-2, O-3 and O-4 to an Output Multiplexer (OMUX) and switching assembly 400.

The OMUX and switching assembly 400 may include mechanical switches 410 that couple the signals I-1, O-1, O-2, O-3 and O-4 to outbound multiplexers (OMUX) 420. The signals pass through the OMUXes 420 and are appropriately distributed to mechanical switches 430. The switches 430 distribute the signals to one of the downlink OMTs 510 and the corresponding downlink antenna such as a first dual-polarization downlink antenna 520, a second dual-polarization downlink antenna 530, a third dual-polarization downlink antenna 540 and a fourth dual-polarization downlink antenna 550.

Power converter unit 150 and centralized frequency source unit 160 are shared across all beam groups of the satellite. Power converter unit 150 supplies DC power to the LNA D/Cs 130 and the C-Band utility amplifiers 140. Centralized frequency source unit 160 supplies local oscillation (LO) signals to the LNA D/Cs 130 and to the U/Cs 320. It supplies four coherent LO output signals to accommodate the net frequency translation requirement (one for the LNA/down-converters and three for the up-converters) of the payload frequency plan described below. Since the frequency source unit 160 provides coherent LO outputs, the payload architecture demonstrates excellent frequency stability and phase noise performance.

As described above, the IMUX and switching assembly 200 and the OMUX and switching assembly 400 operate to appropriately switch and filter uplinked signals from any one of the uplink antennas 20, 30, 40 and 50 to any one of the downlink antennas 520, 530, 540 and 550. While Fig. 3 shows one embodiment for the IMUX and switching assemblies 200 and one embodiment for the OMUX and switching assembly 400, other embodiments and configurations are also within the scope of the present invention. The IMUX and switching assembly 200 operates at lower frequency (such as 4 GHz) than the OMUX and switching assembly 400.

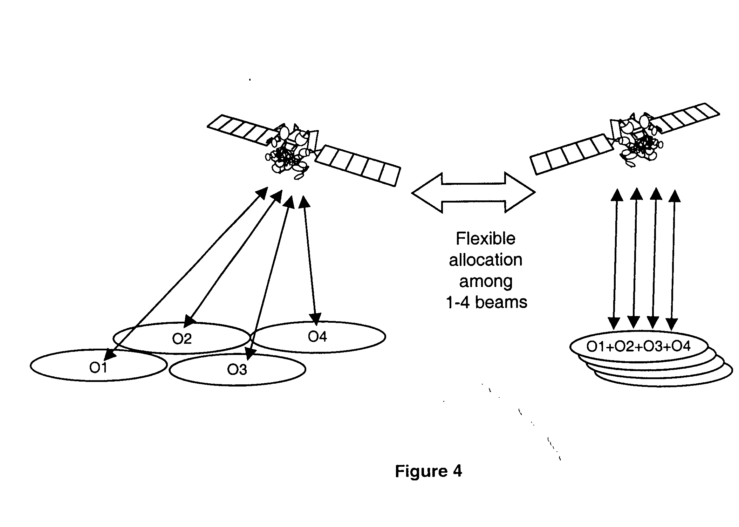

FIG. 4 is a diagram conceptually illustrating the feature of flexibly allocating spot beam capacity of a satellite in order to increase the capacity for a geographical area. This flexible allocation may be desirable, for example, because demand has increased in the geographical area. The satellite is depicted with four spot beams as typically covered by the feeds located within one or more of the antennas of the satellite. The satellite has four channels, 01, 02, 03 and 04, to allocate among the four spot beams. As indicated in FIG. 4, each of the signals 01, 02, 03 or 04 may directed to different respective geographical areas, or all signals may be concentrated to any geographical area. Fig. 4 illustrates an extreme signal re-allocation scenario, and many other combinations of signal distribution are possible. For instance, two signals could be provided to a high-priority geographical area and one signal could be allocated to each of two lower-demand geographical areas. These configurations can be changed on-orbit. Therefore, when demand rises within a particular geographical area it is possible to have additional signals routed to the high demand area, while taking signals away from other areas in the beam group. Altering the allocation of channels at any given moment in time can be done utilizing commandable switches on-board the satellite.

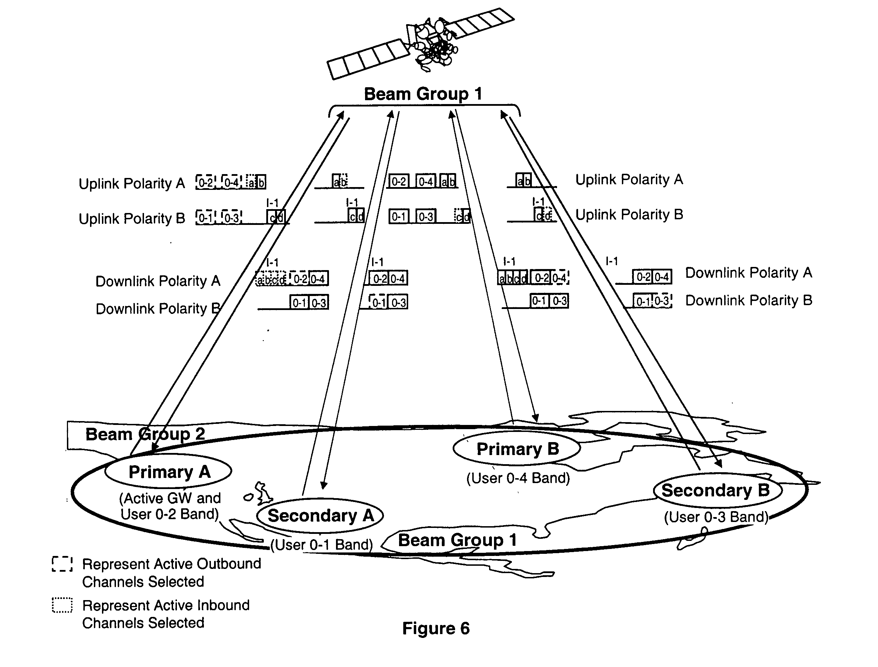

As discussed further below with respect to Fig. 6, the satellite in the preferred embodiments has eight independent beam groups, each of which provides coverage to four ground cells, for a total coverage of 32 ground cells per satellite. Each beam group has a single active gateway, four outbound transponders, and one inbound transponder. The design is modular, easily accommodating additional beam groups to provide even greater coverage.

The payload architecture allows the distribution of the four outbound transponders in a group among up to four beams. Capacity can be concentrated in one beam, spread among several beams, or spread evenly among all four beams. The distribution can be changed on-orbit. The satellite in the preferred embodiments is a hemispherical earth coverage satellite for use with broadband communications, such as for the Internet. The satellite may include numerous antenna structures (such as disclosed in U.S. Patent No. 6,236,375) that have a large number of spot beams. With such a satellite, the payload architecture has high market flexibility because connectivity can be modified on-orbit.

As shown in Fig. 6, each of the eight beam groups provides simultaneous two-way communication between a single active gateway in one of two cells and all user terminals in any of four cells. For each beam group, the active gateway may be located in either the Primary A cell or the Primary B cell. Gateway selection is commandable on-orbit, enabling on-orbit service restoration if required. For traffic outbound from the gateway, the payload receives a dual-polarization uplink from the active gateway and downlinks each of the four outbound channels (designated O-1, O-2, O-3, O-4) to user terminals in any of the four ground cells. The example shown in Fig. 6 illustrates each ground cell receiving one outbound channel; however, the payload architecture in the preferred embodiments has the flexibility to route one, two, three, or four outbound channels to any single ground cell, thereby re-allocating capacity on-orbit.

For traffic inbound to the gateway, the payload architecture receives four sub-channel uplinks (designated I-1 a, I-1b, I-1c, and I-1d in Fig. 6) from the users in up to four ground cells, corresponding to the four outbound channels. The payload architecture multiplexes the four sub-channels and routes the combined signal to the active gateway. Fig. 6 assumes that an O-2 outbound channel has a corresponding I-1a inbound sub-channel, O-4 corresponds to I-1c, O-1 corresponds to I-1b, and O-3 corresponds to I-1d. However, the payload architecture has the flexibility to change the mapping between outbound channel and inbound sub-channel based on ground commands.

For outbound processing, the multi-beam antenna receives the dual-polarization gateway uplink from either the Primary A or the Primary B cell. The signal on each polarization is down-converted to C-band, amplified, and channelized by a 1:2 IMUX, generating four channels: O-1, O-2, O-3, and O-4. Each of the four channels is then up-converted, gain-controlled, and amplified by a linearized TWTA. The OMUX and Switching Assembly switches and combines the outbound channels as necessary to provide between zero and four channels to each ground cell in the beam group. The signals are then routed to the downlink antenna for transmission to one, two, three, or four cells within the beam group.

Four user uplink inbound sub-channels are received by the multi-beam antenna from either one, two, three, or four of the cells within the beam group. The four sub-channels are routed to 4:1 switches and then to a 4:1 inverse IMUX, where they are combined into one I-1 channel. The I-1 channel is up-converted, gain-controlled, and amplified by a linearized TWTA. The OMUX and Switching Assembly combines the I-1 channel with the appropriate outbound channel, and then switches the signal to the downlink feed servicing the gateway ground cell.

As mentioned above, the C-Band IF section enables the use of C-band payload equipment, simple input section filtering, inexpensive connectivity switching and the payload frequency plan shown in Fig. 5. The payload frequency plan results in maximum reuse of existing hardware and flight-proven C-band filter technology. Reuse of such existing hardware minimizes development risk and non-recurring costs for a satellite.

All input section channel filtering can be performed at C-band using conventional IMUX designs. These conventional IMUX designs deliver excellent passband/rejection performance and are widely available in the marketplace. Similarly, switching and routing can be performed with IF switches and cables instead of waveguide, which would be needed if a direct 30 to 20 GHz frequency translation was performed.

The payload frequency plan shown in Fig. 5 involves selectable up-conversions for spectral flexibility. These up-conversions, with selectable translation amounts, place each channel in the right spectral locations for the downlink spot beams. Specific frequency ranges and translations are shown in Fig. 5, however any number and combination of different frequency translations are possible.

The initial block down-conversions also may comprise a different translation for different input signals. For example, a first translation might be implemented on the H polarization of a given feed and a second translation might be implemented on the V polarization of the same feed, or the translations might differ from feed to feed.

In the payload frequency scheme of selectable translations, redundancy of the output hardware is implemented as a single string: up-conversion, channel amplification, and power amplification (UC 320, LCAMP 330, TWTA 340). The flexible use of different up-conversion translations via different choice of local oscillator (LO) frequency also allows for pooling for redundancy across different translations. For instance, a spare string could be used, in event of failure, for a 19.5 GHz output or a 20GHz output via a switchable LO frequency. It also allows for larger redundancy pools which provide hardware savings (in cost and mass) and equivalent reliability performance.

The nature of transponded spot-beam systems also provides an advantage related to the block down-conversions and various up-conversions. When used in a network topology having a gateway in one coverage cell to uplink signals destined for multiple cells, the frequency conversions often require an arrangement of the signals in frequency that differs between the uplink and the downlink. If rearrangements were made on the down-conversion, there would need to be more than one down-converter per input signal to implement the multiple conversions. If a block down-conversion is implemented, there is just one down-conversion per input, and the rearrangement is done efficiently over a narrower bandwidth at the up-conversion stage.

While the invention has been described with reference to specific preferred embodiments, the description of the preferred embodiments is illustrative only and is not to be construed as limiting the scope of the invention. Various other modifications and changes may occur to those skilled in the art without departing from the spirit and scope of the invention.

## Claims

1. A multi-beam satellite comprising:
an input section to receive a plurality of uplink spot beams in a first range of frequencies;
an output section to transmit a plurality of downlink spot beams in a second range of frequencies; and
an IF section coupled between said input section and said output section, said IF section to down-convert said plurality of uplink spot beams in said first range of frequencies to a plurality of intermediate signals in an intermediate range of frequencies, flexibly and selectively switch and filter said plurality of intermediate signals in said intermediate range of frequencies, and up-convert said plurality of intermediate signals in said intermediate range of frequencies to said plurality of downlink spot beams in said second range of frequencies.

2. The satellite of claim 1, wherein said first range of frequencies and said second range of frequencies are in a different band of satellite frequencies from the intermediate range of frequencies.

3. The satellite of claim 1, wherein said IF section up-converts said plurality of intermediate signals in said range of intermediate frequencies with selectable translation amounts.

4. The satellite of claim 1, wherein said satellite allocates capacity among said plurality of uplink spot beams by switching and filtering of said plurality of uplink spot beams in said IF section.

5. The satellite of claim 1, further comprising an RF module mounted on an antenna, said RF module including a low noise amplifier, or a combination of a low noise amplifier and down-converter (LNA D/C), and redundancy switching.

6. The satellite of claim 5, wherein down conversions in the IF section perform different translations for different uplink spot beams; and wherein a first frequency translation is implemented on a first polarization and a second frequency translation, different from the first frequency translation, is implemented on a polarization opposite to the first polarization.

7. The satellite of claim 5, wherein said down-downversions in the IF section perform different translations for different uplink spot beams; and wherein a first frequency translation is performed on said plurality of uplink spot beams and a second frequency translation, different from the first frequency translation, is performed on a second plurality of uplink spot beams.

8. The satellite of claim 3, wherein said selectable translation amounts are obtained by selection of different local oscillation frequencies.

9. The satellite of claim 3, wherein said IF section performs block down-conversions and the rearrangement and selection of said plurality of uplink spot beam frequencies is performed by selectable up-conversions.

10. A method of switching a plurality of uplink spot beams to a plurality of downlink spot beams in a multi-beam satellite, said method comprising:
down-converting said plurality of uplink spot beams to a plurality of intermediate frequencies;
selectively switching and filtering said plurality of uplink spot beams at said plurality of intermediate frequencies; and
up-converting said switched and filtered uplink spot beams from said intermediate frequencies by a plurality of selectable frequency translation amounts to the frequencies of said plurality of downlink spot beams.

11. The method of claim 10, wherein said switching and filtering serves to allocate capacity among said plurality of uplink spot beams.

12. The method of claim 10, wherein said plurality of uplink spot beams are down-converted by different frequency translations, determined by a characteristic of each uplink spot beam, selected from identification with a block of beams, polarization type, or local oscillation frequency.
